(19) **Europäisches Patentamt**
**European Patent Office**
**Office européen des brevets**

(11) **EP 2 460 845 B1**

(12) **EUROPEAN PATENT SPECIFICATION**

(45) Date of publication and mention
of the grant of the patent:
**30.03.2016 Bulletin 2016/13**

(51) Int Cl.:
*C08J 5/18* (2006.01)      *C01G 23/04* (2006.01)
*C08K 5/09* (2006.01)      *C08K 9/02* (2006.01)
*C08L 27/12* (2006.01)

(21) Application number: **10804322.5**

(22) Date of filing: **22.07.2010**

(86) International application number:
**PCT/JP2010/062371**

(87) International publication number:
**WO 2011/013576 (03.02.2011 Gazette 2011/05)**

(54) **FLUORORESIN FILM AND METHOD FOR PRODUCING SAME**

FLUORHARZFILM UND HERSTELLUNGSVERFAHREN DAFÜR

FILM DE FLUORORÉSINE ET SON PRÉCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.07.2009 JP 2009176620**

(43) Date of publication of application:
**06.06.2012 Bulletin 2012/23**

(73) Proprietor: **Asahi Glass Company, Limited
Tokyo 100-8405 (JP)**

(72) Inventor: **ARUGA, Hiroshi
Tokyo 100-8405 (JP)**

(74) Representative: **Müller-Boré & Partner
Patentanwälte PartG mbB
Friedenheimer Brücke 21
80639 München (DE)**

(56) References cited:
**EP-A1- 2 116 579      WO-A1-2008/078657
WO-A1-2008/078704      JP-A- 7 315 838
US-A1- 2009 263 650**

**Description**

TECHNICAL FIELD

The present invention relates to a fluororesin film and a process for its production.

BACKGROUND ART

A fluororesin film is excellent in weather resistance, soiling resistance, etc. and thus, is used, for example, as a roof material, a wall material, etc. of agricultural houses or film structures (such as outdoor exhibition facilities, sports facilities). However, a fluororesin film has a high solar transmittance, and therefore, when it is used as a roof material, a wall material, etc., the inside tends to be too bright, or the inside temperature tends to increase too much, and in some cases, it is required to suppress the solar transmittance.

As a method to suppress the solar transmittance of a fluororesin film, a method of reflecting the direct sunlight, a method of absorbing the direct sunlight, etc. may be mentioned. Among them, the method of reflecting the direct sunlight is preferred, since by the method of absorbing the direct sunlight, the temperature of the fluororesin film increases, whereby the mechanical strength of the film deteriorates. As a method of reflecting direct sunlight entering into a fluororesin film, a method may, for example, be mentioned wherein a white pigment such as a titanium oxide pigment having a high refractive index is dispersed in the fluororesin film.

However, a fluororesin film containing a titanium oxide pigment has the following problems.

(i) Titanium oxide is likely to undergo discoloration or decomposition by ultraviolet rays. As a result, the fluororesin film is likely to undergo discoloration or a change in the solar reflectance.

(ii) By photocatalysis of titanium oxide by ultraviolet rays, the fluororesin film is likely to undergo discoloration, or the mechanical strength of the fluororesin film tends to deteriorate. As a result, a change in the solar reflectance of the fluororesin film occurs.

(iii) Hydrogen fluoride is formed by decomposition of the fluororesin by the photocatalysis of titanium oxide, and by such hydrogen fluoride, the white pigment as well as other coloring pigments incorporated to the film undergoes color fading. As a result, discoloration or a change in the solar reflectance of the fluororesin film occurs.

As a pigment to solve the above problem (i), the following pigments have been proposed.

(1) A pigment having cerium oxide and dense amorphous silica precipitated on the surface of rutile-type titanium oxide, wherein the amount of cerium oxide is from 0.01 to 1.0 mass% of titanium oxide, and the amount of the dense amorphous silica is from 1 to 8 mass% of titanium oxide (Patent Document 1).

(2) A pigment made of rutile-type titanium oxide particles having a covering layer made of alumina or alumina/silica, wherein the surface of the particles has cerium cations in an amount of from 0.5 to 2 mass% of titanium oxide and a stoichiometric amount of sulfate anions, phosphate anions or silicate anions bonded thereto (Patent Document 2).

The above pigments (1) and (2) are able to suppress discoloration or decomposition of the pigments themselves by ultraviolet rays but are not able to sufficiently suppress the photocatalysis of the pigments. Particularly, such pigments are not supposed to be used together with a fluororesin, the durability against hydrogen fluoride is insufficient. Therefore, they cannot solve the problems (ii) and (iii), whereby discoloration, a change in the solar reflectance or deterioration of the mechanical strength of the fluororesin film occurs.

On the other hand, the following pigment has been proposed as a pigment to be contained in a coating layer to be formed on a fluororesin film.

(3) Composite particles having a three-layered structure which comprises, in order from the inside, a particle containing titanium oxide, a covering layer containing cerium oxide and a covering layer containing silicon oxide (Patent Document 3).

By such composite particles, the photocatalysis of titanium oxide is reduced by cerium oxide. Further, by the covering layer containing silicon oxide as an outer layer of cerium oxide, the reaction of cerium oxide with hydrogen fluoride formed in the coating layer is prevented, whereby the effect to prevent the photocatalysis is maintained.

PRIOR ART DOCUMENTS

PATENT DOCUMENTS

Patent Document 1: JP-A-7-315838
Patent Document 2: JP-A-59-184264
Patent Document 3: WO2008/078657

DISCLOSURE OF INVENTION

TECHNICAL PROBLEM

As a method to solve the above problems (i) to (iii) in a fluororesin film having a titanium oxide pigment dispersed therein, a method of employing the above composite particles (3) as disclosed in Patent Document 3, is conceivable. However, when the present inventors have studied a fluororesin film having the composite particles (3) dispersed therein, it has been found that discoloration, a change in solar reflectance and deterioration of mechanical strength of such a fluororesin film cannot sufficiently be prevented.

It is an object of the present invention to provide a fluororesin film whereby discoloration, a change in solar reflectance and deterioration of mechanical strength can be stably and highly prevented for a long period of time, despite containing titanium oxide, and a process for its production.

SOLUTION TO PROBLEM

The fluororesin film of the present invention comprises a fluororesin and the following composite particles dispersed in the fluororesin.

(Composite particles)

Composite particles characterized in that each of them comprises, in order from the inside, a particle containing titanium oxide, a first covering layer containing silicon oxide or a composite oxide of silicon oxide and aluminum oxide, a second covering layer containing cerium oxide and a third covering layer containing silicon oxide, and their average particle size is from 0.15 to 3 μm.

The fluororesin film of the present invention preferably employs composite particles wherein per 100 parts by mass of the titanium oxide, the silicon oxide in the first covering layer is from 0.5 to 15 parts by mass, the cerium oxide in the second covering layer is from 3 to 35 parts by mass, and the silicon oxide in the third covering layer is from 5 to 60 parts by mass.

Further, the content of the composite particles is preferably at most 20 mass%.

Further, the solar reflectance is preferably from 15 to 90% as measured in accordance with JIS R3106.

Further, the above fluororesin is preferably an ethylene/tetrafluoroethylene copolymer.

The process for producing a fluororesin film of the present invention is a process which comprises surface-treating the surface of the composite particles with a surface-covering agent to adjust methanol hydrophobicity of the composite particles, kneading the surface-treated composite particles and a fluororesin to obtain a resin composition, and forming the resin composition into a film-form.

Further, the process for producing a fluororesin film of the present invention is a process which comprises kneading the composite particles, a fluororesin and a metallic soap to obtain a resin composition, and forming the resin composition into a film-form.

ADVANTAGEOUS EFFECTS OF INVENTION

According to the fluororesin film of the present invention, discoloration, a change in solar reflectance and deterioration of mechanical strength can be stably and highly prevented for a long period of time, despite containing titanium oxide.

Further, according to the process of the present invention, it is possible to obtain a fluororesin film whereby discoloration, a change in solar reflectance and deterioration of mechanical strength can be stably and highly prevented for a long period of time, despite containing titanium oxide.

DESCRIPTION OF EMBODIMENTS

The fluororesin film of the present invention comprises a fluororesin and the following composite particles dispersed in the fluororesin.

[Composite particles]

The composite particles of the present invention are composite particles each comprising, in order from the inside, a particle containing titanium oxide, a first covering layer containing silicon oxide or a composite oxide of silicon oxide and aluminum oxide, a second covering layer containing cerium oxide and a third covering layer containing silicon oxide.

The average particle size of the composite particles is from 0.15 to 3 $\mu$m, preferably from 0.2 to 2 $\mu$m. The average particle size of the composite particles is meant for an average particle size of particles each comprising from the particle containing titanium oxide to the third covering layer. That is, even if another layer is provided as an outer layer of the third covering layer, the average particle size of composite particles is meant for an average particle size with respect to particles up to the third covering layer.

When the average particle size of the composite particles is at least 0.15 $\mu$m, it is possible to sufficiently reflect direct sunlight, as is different from composite particles (average particle size: at most 0.1 $\mu$m) to be used for cosmetics required to have transparency. When the average particle size of the composite particles is at most 3 $\mu$m, it is possible to produce a thin fluororesin film having a thickness of at most 50 $\mu$m. The average particle size of the composite particles is preferably from 1.1 times to 10 times the average particle size of the particle containing titanium oxide to be used as a core.

The average particle size of the composite particles is measured by using a scanning electron microscope (SEM). As the measuring method, a method may be mentioned wherein the composite particles of the present invention are, for example, put in an alcohol such as isopropanol, and after adjusting the solid content concentration to be about 0.1 mass%, the composite particles are completely dispersed by e.g. ultrasonic waves, followed by dropping on a collodion film and drying, whereupon SEM observation is carried out. In this specification, the particle size is meant for a particle diameter of a particle observed. Further, the average particle size is meant for an average value of twenty particles randomly selected in the obtained SEM image. In the present invention, the average particle size is calculated by such a method.

(Particle containing titanium oxide)

The composite particles of the present invention are required to sufficiently reflect direct sunlight, and accordingly, as the core, a particle containing titanium oxide having a high refractive index is used. As disclosed in JP-A-10-292056, if silicon oxide particles having a low refractive index (such as silica, talc or mica) are employed, the direct sunlight cannot adequately be reflected, and a large amount of composite particles will be required in order to improve the solar reflectance of the fluororesin film.

The particle containing titanium oxide may, for example, be a titanium oxide pigment, a titanium oxide-covered mica or a pigment of a composite oxide containing titanium oxide. Among them, a titanium oxide pigment is preferred from the reflection of direct sunlight, and a titanium oxide pigment having a high sphericity is more preferred.

The composite oxide containing titanium oxide may, for example, be CrSbTl oxide (orange color), FeAlTi oxide (orange color), NiSbTi oxide (lemon color), NiCoZnTi oxide (green color) or MnSbTi oxide (brown color). Further, the pigment of such a composite oxide may, for example, be a yellow pigment (such as titanium yellow or chromium yellow), a green pigment (such as cobalt/zinc/titanium) or a brown pigment (such a manganese brown).

Also a composite oxide containing titanium oxide undergoes discoloration and decomposition by ultraviolet rays and further shows photocatalysis. Therefore, the particle of such a composite oxide is covered by a first covering layer containing silicon oxide or a composite oxide of silicon oxide and aluminum oxide, a second covering layer containing cerium oxide and a third covering layer containing silicon oxide. It is thereby possible to obtain composite particles which are capable of constantly and highly preventing discoloration, decomposition and photocatalysis by ultraviolet rays and which are excellent in durability against hydrogen fluoride and have an inherent color of the particle of such a composite oxide used as the core.

The average particle size of the particle containing titanium oxide is preferably from 0.1 to 2 $\mu$m, more preferably from 0.2 to 1 $\mu$m. When the particle containing titanium oxide has an average particle size of at least 0.1 $\mu$m, it tends to sufficiently reflect direct sunlight, as is different from a titanium oxide pigment for application to cosmetics where transparency is required (average particle size: at most 0.05 $\mu$m). When the average particle size of the particle containing titanium oxide is at most 2 $\mu$m, it is possible to produce a thin fluororesin film having a thickness of at most 50 $\mu$m.

The average particle size of the particle containing titanium oxide is obtained as an average value of twenty particles randomly selected in a SEM image in the same manner as for the average particle size of composite particles of the present invention.

(First covering layer)

The first covering layer is a layer containing silicon oxide or a composite oxide of silicon oxide and aluminum oxide. By providing the first covering layer, discoloration, decomposition and photocatalysis of titanium oxide by ultraviolet rays can be prevented, and discoloration, a change in solar reflectance and deterioration of mechanical strength of the fluororesin film can be stably and highly prevented.

The silicon oxide may, for example, be crystalline silica formed by hydrolysis of ethyl silicate or the like, or non-crystalline amorphous silica made of water glass containing sodium ions, etc.

The first covering layer is preferably a layer containing silicon oxide as the main component. The layer containing silicon oxide as the main component is a layer wherein the content of silicon oxide is at least 50 mass%. The content of silicon oxide in the layer containing silicon oxide as the main component is preferably at least 60 mass%, more preferably at least 75 mass%, particularly preferably 100 mass%.

The first covering layer may be composed of a single layer or may be composed of a plurality of layers. In a case where the first covering layer is composed of a plurality of layers, a part of the first covering layer may be a layer wherein the content of silicon oxide is less than 50 mass% (provided that it is not zero and preferably at least 10 mass%). In such a case, the layer containing silicon oxide as the main component is preferably at least 50 mass%, more preferably at least 65 mass%, based on the entire first covering layer.

A component other than silicon oxide which may be contained in the first covering layer may be a metal oxide other than silicon oxide, such as aluminum oxide, aluminum hydroxide or zirconium oxide. Among them, aluminum oxide or aluminum hydroxide is preferred, since dispersibility of particles in water or the like is thereby improved at the time of forming the second covering layer on the first covering layer in the production of composite particles.

Silicon oxide in the first covering layer may form a composite oxide with such another metal oxide.

The amount of silicon oxide contained in the first covering layer is preferably from 0.5 to 15 parts by mass, more preferably from 1 to 12 parts by mass, further preferably from 1 to 11 parts by mass, per 100 parts by mass of titanium oxide in the particle containing titanium oxide. When the amount of silicon oxide per 100 parts by mass of titanium oxide is at least 0.5 part by mass, discoloration, a change in solar reflectance and deterioration of mechanical strength of the fluororesin film can easily be prevented. Further, when the amount of silicon oxide is at least 1 mass%, it becomes easy to completely cover the surface of the particle containing titanium oxide with silicon oxide, thereby to prevent discoloration, decomposition and photocatalysis of titanium oxide, whereby the effect to prevent discoloration, a change in solar reflectance and deterioration of mechanical strength of the fluororesin film can easily be obtained.

In a case where the first covering layer contains another metal oxide, the amount of silicon oxide contained in the first covering layer does not include the amount of such another metal oxide. Further, in a case where the first covering layer is composed of a plurality of layers, the amount of silicon oxide is the total amount of silicon oxide in all of such layers.

(Second covering layer)

The second covering layer is a layer containing cerium oxide. Cerium oxide has a high ultraviolet ray-shielding ability. Therefore, by forming the second covering layer, it is possible to reduce ultraviolet rays that reach the particle containing titanium oxide.

The second covering layer is preferably a layer containing cerium oxide as the main component. The layer containing cerium oxide as the main component is a layer wherein the content of cerium oxide is at least 60 mass%. The content of cerium oxide in the layer containing cerium oxide as the main component is preferably at least 75 mass%, more preferably at least 85 mass%, particularly preferably 100 mass%.

The second covering layer may be composed of a single layer or may be composed of a plurality of layers. In a case where the second covering layer is composed of a plurality of layers, a part of the second covering layer may be a layer wherein the content of cerium oxide is less than 60 mass% (provided that it is not zero and preferably at least 10 mass%). In such a case, the layer containing cerium oxide as the main component is preferably at least 60 mass%, more preferably at least 80 mass%, based on the entire second covering layer.

A component other than cerium oxide contained in the second covering layer may, for example, be a metal oxide other than cerium oxide, such as cerium hydroxide.

Cerium oxide in the third covering layer may form a composite oxide with such another metal oxide.

The amount of cerium oxide contained in the second covering layer is preferably from 3 to 35 parts by mass, more preferably from 3 to 30 parts by mass, further preferably from 5 to 30 parts by mass, particularly preferably from 8 to 20 parts by mass, per 100 parts by mass of titanium oxide in the particle containing titanium oxide. When the amount of cerium oxide per 100 parts by mass of titanium oxide is at least 3 parts by mass, a sufficiently high ultraviolet ray-shielding ability can easily be obtained. Particularly in an application where the conditions are severer, the amount of cerium oxide per 100 parts by mass of titanium oxide is preferably at least 5 parts by mass. When the amount of cerium oxide per 100 parts by mass of titanium oxide is at most 35 parts by mass, a yellow tint specific to cerium oxide can be suppressed, so that the inherent color of the particle containing titanium oxide used as the core can easily be reproduced. Further, by the first covering layer containing silicon oxide as the main component, deterioration of the adhesion with the particle containing titanium oxide can easily be prevented. The pigment disclosed in Patent Document 1 has an extremely small amount of cerium oxide, whereby the ultraviolet ray-shielding ability is inadequate, and the photocatalysis of the pigment is not sufficiently prevented.

In a case where the second covering layer contains another metal oxide, the amount of cerium oxide contained in the second covering layer does not include the amount of such another metal oxide. Further, in a case where the second covering layer is composed of a plurality of layers, the amount of cerium oxide is the total amount of cerium oxide in all of such layers.

(Third covering layer)

The third covering layer is a layer containing silicon oxide.
Silicon oxide in the third covering layer reduces the yellow tint of cerium oxide. Therefore, by providing the third covering layer, the inherent color of the particle containing titanium oxide used as a core can be reproduced. Further, as compared with cerium oxide, silicon oxide has high durability against hydrogen fluoride formed from a fluororesin, although the ultraviolet ray-shielding ability may be low as compared with cerium oxide. As a result, by providing the third covering layer, it is possible to protect the second covering layer containing cerium oxide from hydrogen fluoride and to prevent deterioration of the ultraviolet ray-shielding ability of the second covering layer.
The silicon oxide to be contained in the third covering layer may, for example, be crystalline silica formed by hydrolysis of ethyl silicate or the like, or non-crystalline amorphous silica made of water glass containing sodium ions, etc.
The third covering layer is preferably a layer containing silicon oxide as the main component. The layer containing silicon oxide as the main component is a layer wherein the content of silicon oxide is at least 50 mass%. The content of silicon oxide in the layer containing silicon oxide as the main component is preferably at least 60 mass%, more preferably at least 75 mass%, particularly preferably 100 mass%.
The third covering layer may be composed of a single layer or may be composed of a plurality of layers. In a case where the third covering layer is composed of a plurality of layers, a part of the third covering layer may be a layer wherein the content of silicon oxide is less than 50 mass% (provided that it is not zero and preferably at least 10 mass%). In such a case, the layer containing silicon oxide as the main component is preferably at least 50 mass%, more preferably at least 60 mass%, based on the entire third covering layer.
A component other than silicon oxide contained in the third covering layer may, for example, be a metal oxide other than silicon oxide, such as aluminum oxide or zirconium oxide. Among them, aluminum oxide is preferred, since dispersibility of composite particles in water or the like is thereby improved.
The silicon oxide in the third covering layer may form a composite oxide with such another metal oxide.
The third covering layer may be the same or different from the first covering layer.
The amount of silicon oxide contained in the third covering layer is preferably from 5 to 60 parts by mass, more preferably from 10 to 50 parts by mass, further preferably from 10 to 30 parts by mass, per 100 parts by mass of titanium oxide in the particle containing titanium oxide. When the amount of silicon oxide per 100 parts by mass of titanium oxide is at least 5 parts by mass, it becomes easy to protect the second covering layer containing cerium oxide from hydrogen fluoride. When the amount of silicon oxide per 100 parts by mass of titanium oxide is at most 60 parts by mass, it is easy to prevent the third covering layer from becoming too thick, whereby the third covering layer tends to scarcely detach at the time of preparing a composition for forming a coating layer. Further, deterioration of the refractive index of composite particles can be suppressed, whereby it is easy to control the amount of composite particles required to suppress the solar reflectance of the fluororesin film. The pigment disclosed in Patent Document 1 is not supposed to be used together with a fluororesin, and therefore, the amount of dense amorphous silica is relatively small, whereby there may be a case where cerium oxide cannot be sufficiently protected from hydrogen fluoride.
Further, the amount of silicon oxide contained in the third covering layer is preferably from 50 to 300 parts by mass, more preferably from 100 to 200 parts by mass, per 100 parts by mass of cerium oxide contained in the second covering layer. When the amount of silicon oxide per 100 parts by mass of cerium oxide is at least 50 parts by mass, it is easy to protect the second covering layer containing cerium oxide from hydrogen fluoride. When the amount of silicon oxide per 100 parts by mass of cerium oxide is at most 300 parts by mass, the third covering layer can easily be prevented from becoming too thick, whereby the third covering layer tends to scarcely detach at the time of preparing the fluororesin film. Further, deterioration of the refractive index of composite particles can be prevented, whereby it is easy to control the amount of composite particles required to suppress the solar reflectance of the fluororesin film.

In a case where the third covering layer contains another metal oxide, the amount of silicon oxide contained in the third covering layer does not include the amount of such another metal oxide. Further, in a case where the third covering layer is composed of a plurality of layers, the amount of silicon oxide is the total amount of silicon oxide in all of such layers.

(Another layer)

The composite particles of the present invention may have, as the case requires, another layer between the second covering layer and the third covering layer, or outside of the third covering layer.

Such another layer may, for example, be an aluminum oxide layer, an aluminum hydroxide layer or a surfactant layer, to be formed outside of the third covering layer. The aluminum oxide layer, the aluminum hydroxide layer or the surfactant layer is a layer to improve the affinity (dispersibility) of composite particles to the fluororesin. The surfactant may, for example, be silicone oil, stearic acid, etc.

(Process for producing composite particles)

The composite particles of the present invention may be produced, for example, by the following process (A) having steps (a) to (d) or by the following process (B) having steps (e) to (h).

PROCESS (A):

(a) A step of forming a first covering layer on a particle containing titanium oxide to obtain a silicon oxide-covered particle.
(b) A step of depositing an insoluble cerium compound on the silicon oxide-covered particle to obtain an insoluble cerium compound-covered particle.
(c) A step of forming a third covering layer on the insoluble cerium compound-covered particle to obtain a precursor particle.
(d) A step of firing the precursor particle to convert the insoluble cerium compound to cerium oxide thereby to obtain a composite particle.

PROCESS (B):

(e) A step of forming a first covering layer on a particle containing titanium oxide to obtain a silicon oxide-covered particle.
(f) A step of depositing an insoluble cerium compound on the silicon oxide-covered particle to obtain an insoluble cerium compound-covered particle.
(g) A step of firing the insoluble cerium compound-covered particle to convert the insoluble cerium compound to cerium oxide thereby to obtain a cerium oxide-covered particle.
(h) A step of forming a third covering layer on the cerium oxide-covered particle to obtain a composite particle.

DETAILS OF PROCESS (A)

STEP (a):

The first covering layer is formed, for example, by a method (a1) disclosed in JP-A-53-33228 or a method (a2) disclosed in JP-A-58-84863.

(a1) While maintaining a slurry of particles containing titanium oxide at from 80 to 100°C, the pH of the slurry is adjusted to from 9 to 10.5, and sodium silicate is rapidly added, followed by neutralization so that the pH becomes from 9 to 10.5 again, and then, the slurry is maintained at from 80 to 100°C for from 50 to 60 minutes.
(a2) While maintaining a slurry of particles containing titanium oxide at from 60 to 100°C, a silicate solution is added, and then a mineral acid is gradually added or a silicate solution and a mineral acid are simultaneously added to adjust the pH of the slurry to at least 8, to obtain a covering treatment product. Then, a solid-liquid separated covering treatment product is heated and fired to remove crystallization water from the covering layer to modify the covering layer to a layer containing silicon oxide thereby to obtain a heat-fired product (silicon oxide-covered particles).

The firing temperature is preferably from 300 to 1,000°C, more preferably from 500 to 900°C. When the firing temperature is at least 300, crystallization water tends to be readily removed. When the firing temperature is at most 1,000°C, it is easy to prevent sintering from proceeding thereby to prevent particles containing titanium oxide from being firmly agglomerated one another.

The above methods (a1) and (a2) are widely carried out, and the product is commercially available as weather resistant titanium oxide. As a silicon oxide-covered particle having the first covering layer formed on the particle containing titanium oxide, a commercial product may be used.

Specifically, trade name "CR90", "PFC105" (manufactured by Ishihara Sangyo Kaisha, Ltd.), "FTR700", "D918" (manufactured by Sakai Chemical Industry Co., Ltd.), "JR805", "JR806" (manufactured by Tayca Corporation), etc. may be mentioned.

Further, other than the above methods (a1) and (a2), for the purpose of preventing photocatalysis of a titanium oxide pigment, a method has been proposed to cover the surface with a water-containing oxide (or a hydrate oxide or a hydroxide) of e.g. silicon oxide or aluminum oxide, or an inorganic compound such as an anhydrous oxide. For example, methods disclosed in JP-A-10-130527, JP-A-8-259731, JP-A-10-110115, JP-A-2008-81578 and JP-A-2006-182896 may be used. According to the method disclosed in JP-A-10-130527, it is possible to obtain silicon oxide-covered particles having high density silica and porous silica sequentially covered on the surface of titanium oxide particles.

STEP (b):

The insoluble cerium compound is a cerium compound insoluble in water. The insoluble cerium compound may, for example, be cerium hydroxide, cerium phosphate or cerium carbonate, and cerium hydroxide is preferred.

The insoluble cerium compound-covered particle may be produced, for example, by the following method.

The silicon oxide-covered particles are dispersed in water to obtain an aqueous dispersion. While heating such an aqueous dispersion, an aqueous sodium nitrate solution is dropwise added to the aqueous dispersion. Then, an aqueous sodium hydroxide solution is dropwise added to the aqueous dispersion so that the pH of the aqueous dispersion becomes from 7 to 9, whereby cerium hydroxide is deposited on the silicon oxide-covered particles. Then, the liquid containing the insoluble cerium compound-covered particles is subjected to filtration, and the insoluble cerium compound-covered particles are washed with water and dried.

STEP (c):

The third covering layer is formed by hydrolyzing a silicate (such as sodium silicate) or by hydrolyzing an alkoxysilane (such as ethyl silicate).

The precursor particles may be produced, for example, by the following method.

The insoluble cerium compound-covered particles are dispersed in water by means of a dispersing machine, an emulsifying machine or the like, to obtain an aqueous dispersion. While stirring such an aqueous dispersion, an aqueous silicate solution (such as No. 3 sodium silicate) is dropwise added to such an aqueous dispersion, followed by hydrolysis to form the third covering layer on the insoluble cerium compound-covered particles. The liquid containing the precursor particles is subjected to filtration, and the precursor particles are washed with water and dried.

STEP (d):

Cerium oxide is chemically stable as compared with the insoluble cerium salt, and therefore, firing is carried out. The firing temperature is preferably from 200 to 1,000°C, more preferably from 400 to 600°C.

The firing time is preferably from 1 to 3 hours.

Agglomerates of fired particles are pulverized to obtain composite particles.

DETAILS OF PROCESS (B)

STEP (e):

Step (e) is carried out in the same manner as in Step (a).

STEP (f):

Step (f) is carried out in the same manner as in Step (b).

STEP (g):

Cerium oxide is chemically stable as compared with the insoluble cerium salt, and therefore, firing is carried out. The firing temperature is preferably from 200 to 1,000°C, more preferably from 400 to 600°C.

The firing time is preferably from 1 to 3 hours.

Agglomerates of fired particles are pulverized to obtain cerium oxide-covered particles.

STEP (h):

Composite particles can be produced, for example, by the following method.

The cerium oxide-covered particles are dispersed in a water/alcohol mixed dispersing medium to obtain a dispersion. While stirring such a dispersion, an alkoxysilane (such as ethyl silicate) is added to the dispersion, followed by hydrolysis to form the third covering layer on the cerium oxide-covered particles. The liquid containing the composite particles are subjected to filtration, and the composite particles are washed with water and dried (if necessary, fired).

[Fluororesin]

The fluororesin may, for example, be a vinyl fluoride type polymer, a vinylidene fluoride type polymer, a vinylidene fluoride/hexafluoropropylene copolymer, a tetrafluoroethylene/hexafluoropropylene/vinylidene fluoride copolymer, a tetrafluoroethylene/propylene copolymer, a tetrafluoroethylene/vinylidene fluoride/propylene copolymer, an ethylene/tetrafluoroethylene copolymer (hereinafter referred to as "ETFE"), a hexafluoropropylene/tetrafluoroethylene copolymer, a perfluoro(alkyl vinyl ether)/tetrafluoroethylene copolymer or tetrafluoroethylene (PTFE).

As the fluororesin, one type may be used alone, or two or more types may be used in combination.

As the fluororesin, ETFE, a hexafluoropropylene/tetrafluoroethylene copolymer, a perfluoro(alkyl vinyl ether)/tetrafluoroethylene copolymer, a tetrafluoroethylene/hexafluoropropylene/vinylidene fluoride copolymer or a vinylidene fluoride type polymer is preferred, since it is excellent in transparency and weather resistance. Among them, ETFE is more preferred.

[Fluororesin film]

The content of the composite particles in the fluororesin film may be suitably adjusted to obtain a desired solar reflectance taking into consideration the thickness of the fluororesin film. The content of the composite particles is preferably at most 20 mass%, particularly preferably at most 10 mass%, in the fluororesin film (100 mass%). If the content of the composite particles exceeds 20 mass%, non-tackiness and soiling resistance of the fluororesin film are likely to be substantially impaired. Further, in order to control the solar reflectance to be at least 15%, the content of the composite particles is preferably at least 0.02 mass%, more preferably at least 0.06 mass%, as a film having a thickness of 500 $\mu$m.

The fluororesin film may contain a pigment other than the composite particles. Such another pigment may be a coloring pigment such as an organic pigment or an inorganic pigment. Specifically, it may, for example, be carbon black (black pigment), iron oxide (red pigment), aluminum cobalt oxide (blue pigment), copper phthalocyanine (blue pigment, green pigment), perylene (red pigment) or bismuth vanadate (yellow pigment).

The thickness of the fluororesin film is preferably from 5 to 500 $\mu$m, more preferably from 20 to 300 $\mu$m. If the thickness of the film exceeds 500 $\mu$m, the flexibility of the film tends to be inadequate, and it may not be possible to meet with a design of a film having a curved surface. Further, if the thickness is less than 5 $\mu$m, the handling tends to be difficult, and at the same time, it may not be possible to satisfy the mechanical strength expected as a structural material.

The solar reflectance of the fluororesin film is preferably from 15 to 90%, more preferably from 30 to 65%. When the solar reflectance of the fluororesin film is at most 90%, light of at least 300 lux which is at least required for human activities in the daytime, can easily be maintained. When the solar reflectance is at least 15%, it is easy to prevent the temperature in an agricultural house or in a film structure from becoming too high. Further, when the solar reflectance is from 30 to 65%, it is possible to attain a screen effect such that the interior is hardly seen through, and it is easy to present a temperature or light environment comfortable to humans. The solar reflectance may be suitably determined depending upon the application of the fluororesin film of the present invention, for example, depending upon the type of the film structure such as a sport facility, a commercial facility, a zoo, a botanical garden, etc. or the type of plants cultivated in an agricultural house.

The solar reflectance of the fluororesin film is measured in accordance with JIS R3106 "Test methods for transmittance/reflectance/emissivity/solar radiation heat acquisition rate of plate glasses".

(Process for producing fluororesin film)

The fluororesin film may be produced, for example, by kneading the fluororesin and the composite particles to form a resin composition, and forming the resin composition into a film by a known forming method.

In order to prevent agglomeration of the composite particles during the kneading, it is preferred to employ the following method (x) or (y).

    (x) A method of preliminarily surface-treating the surface of the composite particles with a surface covering agent to adjust methanol hydrophobicity of the composite particles.
    (y) A method of adding a metallic soap represented by a stearic acid salt, to the fluororesin together with the composite particles at the time of the kneading.

METHOD (x):

The surface-covering agent is one which can be firmly bonded to the surface of the composite particles and which can increase the hydrophobicity. Such a surface-covering agent is preferably a reactive silicon compound wherein a hydroxy group or a hydrolyzable group is directly bonded to a silicon atom, more preferably an organic silicon compound which has a hydroxy group or a hydrolyzable group and wherein a hydrophobic organic group is bonded to a silicon atom by a carbon-silicon bond.

The hydrolyzable group may, for example, be an alkoxy group, an acyloxy group, an amino group, an isocyanate group or a chlorine atom. Among them, an alkoxy group having at most four carbon atoms is preferred, and a methoxy group or an ethoxy group is more preferred. It is preferred that from 1 to 4 hydrolyzable groups are bonded to a silicon atom, and it is more preferred that from 2 to 3 hydrolyzable groups are bonded to a silicon atom.

The hydrophobic organic group is preferably a hydrocarbon group having no reactive functional group or hydrophilic group, or a fluorinated hydrocarbon group. Here, a usual silane coupling agent wherein an organic group having a reactive functional group having a high hydrophilicity (e.g. an epoxy group, an amino group or the like) is bonded to a silicon atom, is not suitable as the surface-covering agent.

As the hydrocarbon group or the fluorinated hydrocarbon group, an alkyl group, an alkenyl group, an aryl group, an aralkyl group, a fluoroalkyl group or a fluoroaryl group may, for example, be mentioned. Among them, a $C_{2-20}$ alkyl group, a $C_{2-20}$ fluoroakyl group having at least one fluorine atom, or a phenyl group (which may be substituted by an alkyl group or a fluoroalkyl group) is, for example, preferred.

The organic silicon compound may be an organosilicone compound wherein a hydroxy group or a hydrolyzable group is directly bonded to a silicon atom. The organic group in the organosilicone compound is preferably an alkyl group having at most 4 carbon atoms, or a phenyl group. As such an organosilicone compound, a silicone oil may be mentioned.

As specific examples of the organic silicon compound, the following compounds may, for example, be mentioned.

Tetraalkoxysilanes: tetraethoxysilane, tetramethoxysilane, etc.

Trialkoxysilanes: isobutyltrimethoxysilane, hexyltrimethoxysilane, (3,3,3-trifluoropropyl)trimethoxysilane, etc.

Silicone oils: dimethylsilicone oil, methylhydrogen silicone oil, phenylmethyl silicone oil, etc.

Among them, isobutyltrimethoxysilane, hexyltrimethoxysilane or dimethylsilicone oil is preferred.

The amount of the surface-covering agent is proportional to the size of the specific surface area of the composite particles. If the amount of the surface-covering agent is too small, it is likely that the composite particles undergo color change to black or brown color during the kneading. If the amount of the surface-covering agent is too much, agglomerates made of the surface-covering agent are likely to appear as hard spots thereby to impair the appearance of the fluororesin film.

The amount of the surface-covering agent is suitably adjusted to attain the desired methanol hydrophobicity.

The methanol hydrophobicity of the surface-treated composite particles is preferably from 40 to 75%, more preferably from 60 to 70%. When the methanol hydrophobicity of the composite particles is at least 40%, the dispersibility in a fluororesin will be good, and discoloration of the fluororesin can be prevented.

A preferred methanol hydrophobicity of the composite particles varies to some extent depending upon the type of the fluororesin.

In a case where the fluororesin is ETFE, the methanol hydrophobicity of the composite particles is preferably from 40 to 70%.

In a case where the fluororesin is a hexafluoropropylene/tetrafluoroethylene copolymer or a perfluoro(alkyl vinyl ether)/tetrafluoroethylene copolymer, the methanol hydrophobicity of the composite particles is preferably from 60 to 75%.

In a case where the fluororesin is a tetrafluoroethylene/hexafluoropropylene/vinylidene fluoride copolymer, the methanol hydrophobicity of the composite particles is preferably from 40 to 70%.

The methanol hydrophobicity is an index showing the hydrophobicity of the composite particles. The methanol hydrophobicity is measured by the following method.

Into a 300 mL beaker, 50 mL of distilled water is put, and while thoroughly stirring the distilled water, 5 g of the composite particles are added. If the composite particles are uniformly dispersed in distilled water, the composite particles are excellently compatible with distilled water, and the methanol hydrophobicity is 0%. In a case where the composite particles are not uniformly dispersed in distilled water, methanol is gradually dropwise added to the distilled water. From the total amount M (unit: mL) of methanol added until the composite particles are uniformly dispersed in the aqueous solution, the methanol hydrophobicity D (unit: %) is obtained by the following formula.

$$D=100M/(M+50)$$

METHOD (y):

As the metallic soap, a stearic acid salt (lithium stearate or zinc stearate) may, for example, be mentioned.

At the time of kneading the composite particles with the fluororesin, the stearic acid salt will be selectively coordinated to the composite particles and acts as a surfactant, such being desirable. By such an action, wettability between the highly hydrophilic composite particles and the highly hydrophobic fluororesin will be improved at the time of the kneading, and they can be blended with good dispersibility without agglomeration of the composite particles, such being desirable.

In the case of using the metallic soap, the amount of the metallic soap is preferably from 0.1 to 10 parts by mass, more preferably from 0.5 to 2 parts by mass, per 100 parts by mass of the composite particles.

In the fluororesin film of the present invention as described above, the above-described composite particles are dispersed as a pigment, whereby discoloration, a change in solar reflectance and deterioration of mechanical strength can be stably and highly prevented for a long period of time, despite containing titanium oxide. Such effects in the fluororesin film of the present invention are brought about by the above-described composite particles. Now, the advantageous effects of the composite particles in the present invention will be described in detail.

[Advantageous effects]

The present inventors have attempted to disperse composite particles having two covering layers as disclosed in Patent Document 3 in a fluororesin film, whereby it has sometimes happened that discoloration, a change in solar reflectance and deterioration of mechanical strength of the film are not sufficiently prevented. Therefore, the present inventors have studied the reason and have found the cause to be such that with the composite particles as disclosed in Patent Document 3, the covering layer containing cerium oxide and the covering layer containing silicon oxide are both likely to fall off from the particle containing titanium oxide in the following steps ($\alpha$), ($\beta$) or (y) in the production of a fluororesin film. That is, in the following step ($\alpha$), ($\beta$) or (y), in many particles, the above-mentioned two covering layers fall off from the particles containing titanium oxide, so that the surface not covered by cerium oxide (the surface of the particles containing titanium oxide) is exposed, whereby from such a portion, discoloration, decomposition and photocatalysis of titanium oxide occurs. It has been found that as a result, discoloration, a change in solar reflectance and deterioration of mechanical strength of the film have occurred.

($\alpha$) A step of forming a covering layer containing silicon oxide on the covering layer containing cerium oxide, followed by pulverizing agglomerates of such particles to adjust the particle size to a level of from 0.2 to 0.8 $\mu$m.

(p) At the time of melt-forming a fluororesin film, a step of preliminarily subjecting the surface of the composite particles to dry-system or wet-system hydrophobic treatment, and in the case of drying, pulverizing agglomerates of particles after the drying.

(y) A step of kneading the composite particles and a fluororesin in an extruder.

Therefore, a further study has been made, and the present inventors have found it possible to prevent falling off of the covering layer containing cerium oxide by further forming a covering layer containing silicon oxide between the particle containing titanium oxide and the covering layer containing cerium oxide. That is, they have found it possible to prevent falling off of the second covering layer and the third covering layer by sequentially forming on a particle containing titanium oxide, a first covering layer containing silicon oxide, a second covering layer containing cerium oxide and a third covering layer containing silicon oxide, thereby to stably and highly prevent discoloration, decomposition and photocatalysis of titanium oxide. Details of the mechanism for preventing falling off of the second covering layer and the third covering layer by providing the first covering layer are not clearly understood, but it is considered that the first covering layer plays a role as a binder to firmly adhere the particle containing titanium oxide and the second covering layer.

With the second covering layer, cerium oxide contained in that layer has an ultraviolet ray-shielding ability and thus reduces the amount of ultraviolet rays that reach the particle containing titanium oxide. It is thereby possible to prevent an influence of the ultraviolet rays over titanium oxide covered by the second covering layer.

Even in a case where the second covering layer is not provided, deterioration of the fluororesin film by the photocatalysis can be suppressed to some extent, since the particle containing titanium oxide is not in contact with the fluororesin. However, if the second covering layer is not provided, the effect to suppress deterioration of the fluororesin film is low. This indicates that in order to prevent deterioration of the fluororesin film, it is important not only to avoid the contact of the particle containing titanium oxide with the fluororesin but also to reduce ultraviolet rays that reach the particle containing titanium oxide.

The third covering layer prevents deterioration of the ultraviolet ray-shielding ability of the second covering layer by hydrogen fluoride. The mechanism for the deterioration of the ultraviolet ray-shielding ability of the second covering layer by hydrogen fluoride is as follows.

From a fluororesin, hydrogen fluoride will be formed for the following reason.

(I) At the time of kneading the fluororesin and the composite particles, or at the time of forming a fluororesin film, hydrogen fluoride will be formed by heat decomposition of the fluororesin film.
(II) When the fluororesin film is exposed to sun light, hydrogen fluoride will be formed by photodecomposition of the fluororesin.
(III) If titanium oxide not sufficiently covered, is present, hydrogen fluoride will be formed by decomposition of the fluororesin by its photocatalysis.

If cerium oxide is reacted with hydrogen fluoride, it is converted to cerium fluoride having a low ultraviolet ray-shielding ability, whereby the ultraviolet ray-shielding ability of the second covering layer will be deteriorated.

By the composite particles of the present invention, the third covering layer is provided to protect cerium oxide of the second covering layer from hydrogen fluoride, whereby deterioration of the ultraviolet ray-shielding ability of the second covering layer is prevented.

As described in the foregoing, in the composite particles in the fluororesin film of the present invention, by the second covering layer containing cerium oxide excellent in ultraviolet ray-shielding ability, the amount of ultraviolet rays that reach titanium oxide is reduced, whereby discoloration, decomposition and photocatalysis of titanium oxide by ultraviolet rays are prevented. Further, by the third covering layer containing silicon oxide having relatively high durability against hydrogen fluoride, deterioration of the ultraviolet ray-shielding ability of the cerium oxide by hydrogen fluoride is prevented. Further, by the first covering layer containing silicon oxide that is provided between the particle containing titanium oxide and the second covering layer, the adhesion between the particle containing titanium oxide and the second covering layer is improved. It is thereby possible to prevent falling off of the second covering layer and the third covering layer even in the above-mentioned step (α), (β) or (γ) wherein a large shearing force is exerted to the composite particles. As a result, the composite particles in the present invention are capable of stably maintaining the ultraviolet ray-shielding ability by cerium oxide for a long period of time thereby to stably prevent discoloration, decomposition and photocatalysis of titanium oxide for a long period of time.

Further, in the composite particles of the present invention, the second covering layer is covered by the third covering layer containing silicon oxide, whereby the yellow tint of cerium oxide is reduced. Thus, the inherent color of the particle containing titanium oxide used as a core, can be reproduced.

Thus, by using the composite particles, discoloration, a change in solar reflectance and deterioration of mechanical strength of the fluororesin film can be stably and highly prevented for a long period of time.

The effect of using the composite particles provided with the first covering layer is obtainable particularly distinctly in a case where the composite particles and another pigment are both dispersed in the fluororesin film of the present invention. Discoloration of the fluororesin film by photocatalysis of titanium oxide works to change the color more white. Therefore, in the case of a white fluororesin film using the composite particles of the present invention alone, it is white from the beginning of its production, and accordingly, even if photocatalysis develops, discoloration may not be clearly recognized. However, for example, in a case where it is used in combination with a black pigment (carbon black) to form a light gray fluororesin film, or in a case where it is used in combination with a green pigment (NiCoZnTi oxide) to form a pale green fluororesin film, if the film changes to white by photocatalysis, such a color change is distinctly recognized. That is, when a weather resistance test is carried out in such a case, in the fluororesin film of the present invention, the effect to prevent discoloration is distinctly observed.

A change up to a color difference ∆E* of about 3 may be allowable, but a change exceeding that level brings about a clearly different color, such being undesirable. In order to show particularly excellent weather resistance, the color difference ∆E* is preferably at most 1.

EXAMPLES

Now, the present invention will be described in detail with reference to Examples and Comparative Examples. However, it should be understood that the present invention is by no means restricted by the following description.

Examples 1 to 9 are working Examples of the present invention, and Examples 10 to 17 are Comparative Examples.

(Contents of titanium oxide, cerium oxide and silicon oxide)

The contents of titanium oxide, cerium oxide and silicon oxide were quantitatively analyzed by means of SEM-EDX Integration System S-3400NX manufactured by Hitachi, Ltd.

(Average particle size of composite particles)

Obtained composite particles were put in isopropanol to bring the solid content concentration to about 0.1 mass%, whereupon the composite particles were completely dispersed by ultrasonic waves. Then, they were dropped on a collodion membrane, dried and then subjected to a SEM observation by means of a scanning electron microscope (SEM-EDX Integration System S-3400NX manufactured by Hitachi, Ltd.). An average value of diameters of twenty particles randomly selected in the obtained SEM image, was taken as the average particle size.

(Solar reflectance)

The solar reflectance of a fluororesin film was measured in accordance with JIS R3106 "Test methods for transmittance/reflectance/emissivity/solar radiation heat acquisition rate of plate glasses" by means of a spectrophotometer (UV-3100PC manufactured by Shimadzu Corporation).

(Accelerated weathering tests)

An accelerated weathering test for 5,000 hours was carried out by means of a sunshine weather meter equipped with an open frame carbon arc lamp in accordance with JIS K7350-4 (300 Sunshine Weather Meter, manufactured by Suga Test Instruments Co., Ltd.).
After the accelerated weathering test, the discoloration of the fluororesin film was measured.

(Color difference)

With respect to the color difference before and after the weathering test of the fluororesin film, the reflection colors (L*, a*, b*) were measured, and the color difference was obtained from such reflection colors. The reflection colors were measured in accordance with JIS Z8722, by means of Spectrophotometer SC-T manufactured by Suga Test Instruments Co., Ltd.

EXAMPLE 1

PRODUCTION OF COMPOSITE PARTICLES:

A titanium oxide pigment (CR50 manufactured by Ishihara Sangyo Kaisha, Ltd., titanium oxide particles having an average particle size of 0.20 $\mu$m) and, as a dispersant, sodium pyrophosphate corresponding to 0.05 mass% as calculated as $P_2O_5$, were added to water, followed by preliminary pulverization by means of a sand mill to obtain an aqueous slurry having a titanium oxide concentration of 300 g/L. 0.4 L of this slurry was heated to 80°C with stirring, and while maintaining that temperature, an aqueous sodium silicate solution corresponding to 5 mass% as calculated as $SiO_2$ based on the titanium oxide particles, was added. Then, sulfuric acid (1 N) was added over a period of 60 minutes so that the pH became about 5, followed by aging with stirring for 60 minutes to form the first covering layer of dense water-containing silica. Thereafter, by means of a suction filter, washing and solid liquid separation were carried out to obtain a covering treatment product. The obtained covering treatment product was baked at 700°C over a period of one hour by means of an electric furnace to obtain a baked product (silicon oxide-covered particles).
By the fluorescent X-ray analysis, silica was 5 parts by mass per 100 parts by mass of titanium oxide.
The above baked product was put in water and subjected to wet-pulverization by means of a sand mill to redisperse the silicon oxide-covered particles thereby to obtain an aqueous slurry having a concentration of 300 g/L. While heating and stirring it at 80°C, an aqueous cerium nitrate solution (cerium content: 19 mass% as calculated as $CeO_2$) was dropwise added to the aqueous dispersion. To such an aqueous dispersion, a sodium hydroxide solution was added to neutralize the dispersion to pH 7 to 9 to let cerium hydroxide precipitate on the surface of the silica-covered titanium oxide to obtain cerium hydroxide-covered particles. The liquid containing the cerium hydroxide-covered particles was subjected to filtration, and the cerium hydroxide-covered particles were washed with water and dried. Agglomerates of the cerium hydroxide-covered particles were pulverized to obtain cerium hydroxide-covered particles.
The cerium hydroxide-covered particles were added to 10 L of pure water and dispersed for one hour by a disper mill to obtain an aqueous dispersion. While heating and stirring such an aqueous dispersion at 80°C, 348 g of No. 3 sodium silicate (silicon content: 28.5 mass% as calculated as $SiO_2$) was added to the aqueous dispersion. At that time, dilute sulfuric acid (a 2 N aqueous solution) was also added to maintain the pH of the liquid to be from 9 to 11, and stirring was further continued for one hour. Then, dilute sulfuric acid (a 2 N aqueous solution) was added to bring the pH of the liquid to be from 6 to 8 to form a third covering layer on the cerium hydroxide-covered particles thereby to obtain precursor particles.

The liquid containing the precursor particles was subjected to filtration, and the precursor particles were washed with water and dried. Agglomerates of the precursor particles were pulverized to obtain precursor particles.

The precursor particles were baked at 500°C for two hours, and agglomerates of particles were pulverized by a hammer mill to obtain composite particles having an average particle size of 0.25 $\mu$m.

The content of titanium oxide in the composite particles was 68.6 mass%, the content of cerium oxide was 10.0 mass%, and the content of silicon oxide was 21.4 mass%. From this result and the result of the above fluorescent X-ray analysis, in 100 mass% of the composite particles, titanium oxide was 68.6 mass%, silicon oxide in the first covering layer was 3.4 mass%, cerium oxide in the second covering layer was 10.0 mass%, and silicon oxide in the third covering layer was 18.0 mass%.

Thus, per 100 parts by mass of titanium oxide, silicon oxide in the first covering layer was 5.0 parts by mass, cerium oxide in the second covering layer was 14.6 parts by mass, and silicon oxide in the third covering layer was 26.2 parts by mass.

200 g of the composite particles were put into a small size Henschel mixer, and then, 100 g of a solution having 14 g of isobutyl trimethoxysilane dissolved in water/methanol=1/9 (mass ratio) was slowly added, followed by stirring for 10 minutes. The wet particles were dried at 120°C for 1 hour and again disintegrated by the small Henschel mixer for 2 minutes to obtain surface-treated composite particles. The methanol hydrophobicity of the composite particles was 60%, and the average particle size was 0.25 $\mu$m.

Between before and after the hydrophobic treatment, no change was observed in the average particle size.

PRODUCTION OF FLUORORESIN FILM:

60 g of the surface-treated composite particles, 1 g of carbon black (Acetyleneblack granular products, manufactured by Denki Kagaku Kogyo Kabushiki Kaisha) and 1,939 g of ETFE (FLUON ETFE: 88AX, manufactured by Asahi Glass Company, Limited) were dry-blended by a V mixer to obtain a mixture. The mixture was put into a twin screw extruder, kneaded at 320°C and then pelletized.

The pellets were formed at 320°C by a T-die system to obtain a fluororesin film having a thickness of 50 $\mu$m. As described above, in the fluororesin film (100 mass%), 3 mass% of the composite particles, and 0.05 mass% of carbon black were contained.

The color difference ($\Delta E^*$) of reflected light and the change in solar reflectance of the fluororesin film before and after the accelerated weathering test are shown in Table 2.

EXAMPLES 2 to 5

By changing the charged amounts of materials, in the same manner as in Example 1, composite particles shown in Table 1 were obtained. A fluororesin film was obtained in the same manner as in Example 1 except that such composite particles were used.

The color difference ($\Delta E^*$) of reflected light and the change in solar reflectance of the fluororesin film before and after the accelerated weathering test are shown in Table 2.

EXAMPLE 6

By changing the charged amounts of materials, in the same manner as in Example 1, composite particles shown in Table 1 were obtained. Then, by changing the charged amounts of the composite particles and carbon black, in the same manner as in Example 1, a fluororesin film shown in Table 1 was obtained. The thickness of the film was controlled by adjusting the lip width of the T-die to obtain the prescribed thickness.

The color difference ($\Delta E^*$) of reflected light and the change in solar reflectance of the fluororesin film before and after the accelerated weathering test are shown in Table 2.

EXAMPLES 7 and 8

By changing the charged amounts of materials, in the same manner as in Example 1, composite particles shown in Table 1 were obtained. Using such composite particles and using MnBi composite oxides (6301 BM manufactured by Asahi Glass Company, Limited Sangyo Kaisha, Ltd.) as a black pigment instead of carbon black, by changing the charged amounts, in the same manner as in Example 1, a fluororesin film shown in Table 1 was obtained.

The color difference (ΔE*) of reflected light and the change in solar reflectance of the fluororesin film before and after the accelerated weathering test are shown in Table 2.

EXAMPLE 9

By changing the charged amounts of materials, in the same manner as in Example 1, composite particles shown in Table 1 were obtained. Using the composite particles in an amount shown in Table 1 without using a black pigment, by changing the charged amounts, in the same manner as in Example 1, a fluororesin film shown in Table 1 was obtained.

The color difference (ΔE*) of reflected light and the change in solar reflectance of the fluororesin film before and after the accelerated weathering test are shown in Table 2.

EXAMPLES 10 to 17

By changing the charged amounts of materials, in the same manner as in Example 1, composite particles shown in Table 1 were obtained. Here, Example 10 is titanium oxide itself having no covering layer formed. A fluororesin film shown in Table 1 was obtained in the same manner as in Example 1 except that such composite particles were used.

The color difference (ΔE*) of reflected light and the change in solar reflectance of the fluororesin film before and after the accelerated weathering test are shown in Table 2.

In Table 1, "CB" means carbon black, and "MnBi" means MnBi composite oxide.

TABLE 1

| | Composite particles | | | | | | | | Fluororesin film | | | |
| | Mass% | | | | Parts by mass | | | | Composite particles [mass%] | Another pigment | | Thickness [μm] |
| | $TiO_2$ | (1) $SiO_2$ | (2) $CeO_2$ | (3) $SiO_2$ | $TiO_2$ | (1) $SiO_2$ | (2) $CeO_2$ | (3) $SiO_2$ | | Type | [mass%] | |
|---|---|---|---|---|---|---|---|---|---|---|---|---|
| Ex. 1 | 68.6 | 3.4 | 10.0 | 18.0 | 100 | 5.0 | 14.6 | 26.2 | 3 | CB | 0.05 | 50 |
| Ex. 2 | 75.8 | 1.2 | 5.0 | 10.0 | 100 | 1.6 | 6.6 | 13.2 | 3 | CB | 0.05 | 50 |
| Ex. 3 | 89.0 | 1.2 | 4.0 | 5.8 | 100 | 1.3 | 4.5 | 6.5 | 3 | CB | 0.05 | 50 |
| Ex. 4 | 79.0 | 8.0 | 2.5 | 8.0 | 100 | 10.1 | 3.2 | 10.1 | 3 | CB | 0.05 | 50 |
| Ex. 5 | 66.0 | 4.0 | 20.0 | 10.0 | 100 | 6.1 | 30.3 | 15.2 | 3 | CB | 0.05 | 50 |
| Ex. 6 | 68.6 | 3.4 | 10.0 | 18.0 | 100 | 5.0 | 14.6 | 26.2 | 6 | CB | 0.02 | 200 |
| Ex. 7 | 68.6 | 3.4 | 10.0 | 18.0 | 100 | 5.0 | 14.6 | 26.2 | 6 | MnBi | 0.30 | 200 |
| Ex. 8 | 68.6 | 3.4 | 10.0 | 18.0 | 100 | 5.0 | 14.6 | 26.2 | 6 | MnBi | 0.15 | 200 |
| Ex. 9 | 68.6 | 3.4 | 10.0 | 18.0 | 100 | 5.0 | 14.6 | 26.2 | 6 | - | - | 200 |
| Ex. 10 | 100.0 | 0.0 | 0.0 | 0.0 | 100 | 0.0 | 0.0 | 0.0 | 3 | CB | 0.05 | 50 |
| Ex. 11 | 92.0 | 8.0 | 0.0 | 0.0 | 100 | 8.7 | 0.0 | 0.0 | 3 | CB | 0.05 | 50 |
| Ex. 12 | 96.0 | 4.0 | 0.0 | 0.0 | 100 | 4.2 | 0.0 | 0.0 | 3 | CB | 0.05 | 50 |
| Ex. 13 | 80.0 | 20.0 | 0.0 | 0.0 | 100 | 25.0 | 0.0 | 0.0 | 3 | CB | 0.05 | 50 |
| Ex. 14 | 72.0 | 0.0 | 10.0 | 18.0 | 100 | 0.0 | 13.9 | 25.0 | 3 | CB | 0.05 | 50 |
| Ex. 15 | 77.0 | 0.0 | 5.0 | 10.0 | 100 | 0.0 | 6.5 | 13.0 | 3 | CB | 0.05 | 50 |
| Ex. 16 | 90.2 | 0.0 | 4.0 | 5.8 | 100 | 0.0 | 4.4 | 6.4 | 3 | CB | 0.05 | 50 |
| Ex. 17 | 70.0 | 0.0 | 20.0 | 10.0 | 100 | 0.0 | 28.6 | 14.3 | 3 | CB | 0.05 | 50 |

TABLE 2

| | L*/a*/b* before and after test | | Color difference ΔE* | Solar reflectance [%] | | |
|---|---|---|---|---|---|---|
| | Before test | After test | | Before test | After test | Difference |
| Ex. 1 | 67.88/-0.95/-0.79 | 68.88/-0.90/-0.70 | 1.0 | 30.2 | 31.2 | 1.0 |
| Ex. 2 | 67.95/-1.04/-0.74 | 68.88/-1.00/-0.74 | 0.9 | 30.3 | 31.5 | 1.2 |
| Ex. 3 | 66.88/-1.60/-3.26 | 67.34/-1.45/-3.56 | 0.6 | 27.8 | 28.9 | 1.1 |
| Ex. 4 | 68.29/-1.04/-0.72 | 69.21/-0.89/-0.66 | 0.9 | 30.9 | 32.0 | 1.1 |
| Ex. 5 | 67.92/-1.01/-0.74 | 68.87/-0.45/-0.56 | 1.1 | 30.1 | 31.7 | 1.6 |
| Ex. 6 | 82.23/-0.45/-0.12 | 82.56/-0.44/-0.23 | 0.3 | 52.4 | 52.5 | 0.1 |
| Ex. 7 | 79.86/-0.05/-0.21 | 80.01/-0.44/-0.23 | 0.4 | 62.9 | 62.7 | -0.2 |
| Ex. 8 | 90.94/-0.12/-0.06 | 90.56/-0.10/0.05 | 0.4 | 74.6 | 74.5 | -0.1 |
| Ex. 9 | 97.07/-0.22/-0.12 | 97.85/-0.45/0.12 | 0.8 | 84.0 | 84.0 | 0.0 |
| Ex. 10 | 68.04/-0.97/-0.77 | 78.18/-0.77/-0.66 | 10.1 | 31.1 | 44.5 | 13.4 |
| Ex. 11 | 69.94/-1.42/-1.04 | 75.55/-0.44/-1.23 | 5.7 | 33.8 | 40.6 | 6.8 |
| Ex. 12 | 69.65/-1.83/-3.94 | 76.22/-0.99/-2.44 | 6.8 | 33.2 | 41.2 | 8.0 |
| Ex. 13 | 67.07/-1.48/-3.06 | 72.56/-1.28/-2.88 | 5.5 | 29.8 | 36.8 | 7.0 |
| Ex. 14 | 67.98/-0.98/-0.77 | 71.40/-0.88/-0.70 | 3.4 | 31.0 | 35.0 | 4.0 |
| Ex. 15 | 67.86/-0.92/-0.76 | 71.01/-0.82/-0.66 | 3.2 | 30.8 | 35.0 | 4.2 |
| Ex. 16 | 67.93/-1.01/-0.72 | 71.04/-0.88/-0.66 | 3.1 | 30.4 | 34.5 | 4.1 |
| Ex. 17 | 69.92/-1.49/-3.60 | 73.79/-1.45/-3.21 | 3.9 | 33.2 | 37.6 | 4.4 |

As shown in Table 2, with the fluororesin films in Example 1 to 9 employing composite particles having a four-layered structure wherein on the surface of a titanium oxide particle, the first covering layer made of silicon oxide, the second covering layer made of cerium oxide and the third covering layer made of silicon oxide were sequentially formed, the color difference (ΔE*) after the weathering test was at most 1.1. Further, in the solar reflectance before and after the accelerated weathering test, the change was 1.6% (Example 5) even at the largest, i.e. no substantial change was observed. Thus, the fluororesin films of the present invention showed excellent weather resistance.

On the other hand, with the fluororesin film in Example 10 employing titanium oxide having no covering layer formed, the color difference was as large as 10.1, and the color was remarkably changed to white. Further, the change in solar reflectance was as large as 13.4.

With the fluororesin films in Examples 11 to 13 employing composite particles having no second and third covering layers formed, the color difference exceeded 5, and the solar reflectance changed by from about 7 to 8%.

With the fluororesin films in Examples 14 to 17 employing composite particles having no first covering layer formed, the color difference exceeded 3, and the solar reflectance changed by about 4%. That is, with the fluororesin films in Example 14 to 17, the weather resistance was inferior as compared with the fluororesin films in Examples 1 to 3 and 5 employing composite particles having equivalent second and third covering layers.

As shown in the foregoing, in the fluororesin film of the present invention, composite particles having the first covering layer formed between the particle containing titanium oxide and the second covering layer containing cerium oxide, are used, whereby discoloration, and a change in solar reflectance of the film are stably and highly prevented, and the film had excellent weather resistance.

INDUSTRIAL APPLICABILITY

The fluororesin film of the present invention is useful e.g. as a roof material, a wall material, etc. for outdoor exhibition facilitates, sport facilities, etc. Further, it is also effective for an application to be used semi-outdoor, such as the outermost film of a back sheet of a solar cell.

**Claims**

1. A fluororesin film comprising a fluororesin and the following composite particles dispersed in the fluororesin:

   Composite particles **characterized in that** each of them comprises, in order from the inside, a particle containing titanium oxide, a first covering layer containing silicon oxide or a composite oxide of silicon oxide and aluminum oxide, a second covering layer containing cerium oxide and a third covering layer containing silicon oxide, and their average particle size is from 0.15 to 3 $\mu$m.

2. The fluororesin film according to Claim 1, wherein the composite particles are composite particles wherein per 100 parts by mass of the titanium oxide, the silicon oxide in the first covering layer is from 0.5 to 15 parts by mass, the cerium oxide in the second covering layer is from 3 to 35 parts by mass, and the silicon oxide in the third covering layer is from 5 to 60 parts by mass.

3. The fluororesin film according to Claim 1 or 2, wherein the content of the composite particles is at most 20 mass%.

4. The fluororesin film according to any one of Claims 1 to 3, which has a solar reflectance of from 15 to 90% as measured in accordance with JIS R3106.

5. The fluororesin film according to any one of Claims 1 to 4, wherein the fluororesin is an ethylene/tetrafluoroethylene copolymer.

6. A process for producing a fluororesin film as defined in Claim 1, which comprises surface-treating the surface of the composite particles with a surface-covering agent to adjust methanol hydrophobicity of the composite particles, kneading the surface-treated composite particles and a fluororesin to obtain a resin composition, and forming the resin composition into a film-form.

7. A process for producing a fluororesin film as defined in Claim 1, which comprises kneading the composite particles, a fluororesin and a metallic soap to obtain a resin composition, and forming the resin composition into a film-form.


**Patentansprüche**

1. Fluorharzfolie, umfassend ein Fluorharz und die folgenden in dem Fluorharz dispergierten Verbundteilchen:

   Verbundteilchen, **dadurch gekennzeichnet, dass** jedes von ihnen, in Reihenfolge von dem Inneren aus, ein Titanoxid enthaltendes Teilchen, eine Siliziumoxid oder ein Verbundoxid aus Siliziumoxid und Aluminiumoxid enthaltende erste Deckschicht, eine Ceroxid enthaltende zweite Deckschicht und eine Siliziumoxid enthaltende dritte Deckschicht umfasst, und ihre gemittelte Teilchengröße von 0,15 bis 3 $\mu$m beträgt.

2. Fluorharzfolie nach Anspruch 1, wobei die Verbundteilchen Verbundteilchen sind, wobei pro 100 Massenteile des Titanoxids das Siliziumoxid in der ersten Deckschicht von 0,5 bis 15 Massenteile beträgt, das Ceroxid in der zweiten Deckschicht von 3 bis 35 Massenteile beträgt und das Siliziumoxid in der dritten Deckschicht von 5 bis 60 Massenteile beträgt.

3. Fluorharzfolie nach Anspruch 1 oder 2, wobei der Gehalt der Verbundteilchen höchstens 20 Massen-% beträgt.

4. Fluorharzfolie nach einem der Ansprüche 1 bis 3, welche einen solaren Reflexionsgrad von 15 bis 90 %, wie in Einklang mit JIS R3106 gemessen, aufweist.

5. Fluorharzfolie nach einem der Ansprüche 1 bis 4, wobei das Fluorharz ein Ethylen/Tetrafluorethylen-Copolymer ist.

6. Verfahren zur Herstellung einer wie in Anspruch 1 definierten Fluorharzfolie, welches das Oberflächenbehandeln der Oberfläche der Verbundteilchen mit einem oberflächenbedeckenden Mittel zum Einstellen der Methanolhydrophobizität der Verbundteilchen, das Kneten der oberflächenbehandelten Verbundteilchen und eines Fluorharzes zum Erhalten einer Harzzusammensetzung und das Ausbilden der Harzzusammensetzung in Form einer Folie umfasst.

**7.** Verfahren zur Herstellung einer wie in Anspruch 1 definierten Fluorharzfolie, welches das Kneten der Verbundteilchen, eines Fluorharzes und einer Metallseife zum Erhalten einer Harzzusammensetzung und das Ausbilden der Harzzusammensetzung in Form einer Folie umfasst.

**Revendications**

**1.** Film de résine fluorée comprenant une résine fluorée et les particules composites suivantes dispersées dans la résine fluorée :

des particules composites **caractérisées en ce que** chacune d'elles comprend, dans l'ordre en partant de l'intérieur, une particule contenant de l'oxyde de titane, une première couche de revêtement contenant de l'oxyde de silicium ou un oxyde composite d'oxyde de silicium et d'oxyde d'aluminium, une deuxième couche de revêtement contenant de l'oxyde de cérium, et une troisième couche de revêtement de l'oxyde de silicium, et **en ce que** leur granulométrie moyenne est de 0,15 à 3 $\mu$m.

**2.** Film de résine fluorée selon la revendication 1, dans lequel les particules composites sont des particules composites dans lesquelles, pour 100 parties en masse de l'oxyde de titane, l'oxyde de silicium dans la première couche de revêtement représente de 0,5 à 15 parties en masse, l'oxyde de cérium dans la deuxième couche de revêtement représente de 3 à 35 parties en masse, et l'oxyde de silicium dans la troisième couche de revêtement représente de 5 à 60 parties en masse.

**3.** Film de résine fluorée selon la revendication 1 ou 2, dans lequel la teneur en les particules composites est d'au plus 20 % en masse.

**4.** Film de résine fluorée selon l'une quelconque des revendications 1 à 3, qui présente un coefficient de réflexion de la lumière solaire, telle que mesurée conformément à la norme JIS R3106, de 15 à 90 %.

**5.** Film de résine fluorée selon l'une quelconque des revendications 1 à 4, dans lequel la résine fluorée est un copolymère d'éthylène/tétrafluoroéthylène.

**6.** Procédé pour produire un film de résine fluorée tel que défini dans la revendication 1, qui comprend le traitement en surface de la surface des particules composites avec un agent de revêtement de surface pour ajuster l'hydrophobicité au méthanol des particules composites, le malaxage des particules composites traitées en surface et d'une résine fluorée pour former une composition de résine, et la mise de la composition de résine sous la forme d'un film.

**7.** Procédé pour produire un film de résine fluorée tel que défini dans la revendication 1, qui comprend le malaxage des particules composites, d'une résine fluorée et d'un savon métallique pour former une composition de résine, et la mise de la composition de résine sous la forme d'un film.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7315838 A
- JP 59184264 A
- WO 2008078657 A
- JP 10292056 A
- JP 53033228 A
- JP 58084863 A

- JP 10130527 A
- JP 8259731 A
- JP 10110115 A
- JP 2008081578 A
- JP 2006182896 A